# EUROPÄISCHE PATENTSCHRIFT

(11) **EP 0 755 726 B1**
(45) Veröffentlichungstag und Bekanntmachung des Hinweises auf die Patenterteilung: **02.11.2000**
(21) Anmeldenummer: 96890119.9
(22) Anmeldetag: 10.07.1996
(51) Int. Cl.: B07B 4/02, B01D 50/00

(54) **Verfahren und Anlage zur Sortierung von Schüttgut**
Method and device for sorting bulk material
Procédé et dispositif pour le tri de matières en vrac

(30) Priorität: 27.07.1995 AT 128495
(43) Veröffentlichungstag der Anmeldung: 29.01.1997
(73) Patentinhaber: SBM WAGENEDER Gesellschaft m.b.H., A-4663 Laakirchen (AT)
(72) Erfinder: Beisskammer, Alfred, Ing., 4663 Laakirchen (AT); Hackmair, Walter, 4812 Pinsdorf (AT)
(74) Vertreter: Köhler-Pavlik, Johann, Dipl.-Ing.

(56) Entgegenhaltungen:
- EP-A- 0 198 945
- EP-A- 0 599 801
- DE-A- 2 929 672
- DE-A- 3 713 435
- DE-A- 4 401 352
- GB-A- 2 114 022
- US-A- 3 917 567

## Beschreibung

Die Erfindung betrifft ein Verfahren zur Sortierung von Schüttgut gemäß dem Oberbegriff des Patentanspruchs 1. Die Erfindung betrifft weiters eine Anlage zur Durchführung des Verfahrens gemäß dem Oberbegriff des Patentanspruches 2.

Auf vielen Gebieten der Technik sind Windsichter zur Sortierung von Schüttgut bekannt. Dabei wird zumeist Luft durch im wesentlichen senkrechte Abwurfschurren nach oben gesaugt, wobei in diese Abwurfschurren über Förderbänder, Rüttelrinnen od. dgl. das zu sortierende Schüttgut im Gegenstrom zur durchgesaugten Luft eingebracht wird. Die Luftgeschwindigkeit kann oftmals durch Drosselklappen in der Luftleitung vor oder hinter der Abwurfschurre eingestellt werden.

Beispielsweise ist bei der Baustoffaufbereitung eine Entstaubung gesetzlich vorgeschrieben, wobei die Abluftwerte gemäß TA Luft zwischen 5 und maximal 20 mg Staub pro Normkubikmeter betragen dürfen. Speziell bei mobilen Recyclinganlagen zur Verwendung vor Ort auf der jeweiligen Baustelle ist derzeit noch keine Entstaubung vorgesehen oder möglich. Auch auf vielen anderen Anwendungsgebieten der eingangs beschriebenen Sortieranlagen werden in Zukunft strenge Reinheitswerte für die Abluft einzuhalten sein.

Durch die EP-A-0 599 801 ist eine Anlage zur Aufbereitung von Baumischschutt bekannt geworden, bei welcher ein Verfahren gemäß dem Oberbegriff des Patentanspruches 1 arbeitet und gemäß dem Oberbegriff des Anspruches 2 aufgebaut ist. Bei dieser Anlage ist die Vorabscheidekammer und die Filterkammer in getrennten Anlagen vorgesehen, die durch eine Leitung untereinander verbunden sind. Dies hat den Nachteil, daß die Anlage voluminös ist und nicht als mobile Anlage gebaut werden kann. Außerdem wird die aus der Trennanlage abgesaugte Luft in zwei Luftströme geteilt, welche jeweils einer schwenkbaren Düse je eines Sichters zugeführt wird, die seitlich in den jeweiligen Sichter mündet, um das in den Sichter einfallende Schüttgut in zwei Fraktionen zu unterteilen, von welchen die eine Fraktion frei nach unten abgeführt und die andere, die feinere Fraktion, der Vorabscheidekammer zugeführt wird. Diese Art der Sichtung ist für bestimmte Zwecke nicht zufriedenstellend.

Durch die DE-A1-3 713 435 und DE-A1-2 929 672 ist jeweils ein Sichter für rieselfähiges Gut mit einem stehenden Gehäuse und einem von diesem umschlossenen rohrartigen, in Strömungsrichtung des Sichtstromes sich verjüngenden Sichtkanal, der unten offen und an einen Luft- bzw. Gasstromerzeuger angeschlossen ist, bekanntgeworden, bei welchem am Gehäuseteil ein Anschlußstutzen vorgesehen ist, welcher mit einem den Sichtluftstrom erzeugenden Sauggebläse unter Zwischenschaltung eines Zyklonabscheiders verbunden ist. Im Anschlußstutzen ist eine einstellbare Drosselklappe vorgesehen, mit deren Hilfe der Sichtluftstrom geregelt werden kann. Der Nachteil der bekannten Sichter ist die mangelnde Umweltfreundlichkeit sowie ein aufwendiger Aufbau und Betrieb.

Ziel der Erfindung ist ein Verfahren, mit dem in umweltschonender und zugleich wirtschaftlicher Weise die Sortierung von Schüttgut mittels Windsichtung durchgeführt werden kann und außerdem ein besonders kompakter Aufbau mit optimaler Platzausnutzung einer Anlage zur Durchführung des Verfahrens erreichbar ist, welche Anlage in einfacher und wirtschaftlicher Weise transportabel ausgeführt werden kann.

Dieses Ziel wird erfindungsgemäß durch das Merkmal des kennzeichnenden Teils des Patentanspruchs 1 erreicht. Die einmal zu Beginn des Verfahrens angesaugte oder bereits im System befindliche Luft wird - nach allfälliger Reinigung - wieder als Arbeitsluft für neuerliche Arbeitszyklen verwendet. Damit gelangen keinerlei Emissionen ins Freie und der Frischluftverbrauch des Verfahrens kann in umweltgerechter Weise drastisch reduziert werden. Dies bringt aber auch aufgrund der geringeren Ansaugvolumina eine deutliche Energieeinsparung mit sich.

Das oben und in vorteilhaften Ausgestaltungen im folgenden beschriebene Verfahren kann für die Entstaubung bei der Baustoff- oder Bauschuttaufbereitung, speziell zur Entfernung der Leichtfraktion, zur Trennung feinkörniger Sande unterschiedlicher Korngröße bzw. Dichte, zur trockenen Sieblinienkorrektur durch Ausblasen des Feinstanteiles, zur Reinigung von z.B. Getreide und dergleichen mehr, d. h. allgemein zur Behandlung und Sortierung oder Reinigung von Schüttgut im allgemeinsten Sinn, Anwendung finden. Es kann zur Sortierung, Entstaubung, oder zur kombinierten Sortierung mit Entstaubung in einem oder auch mehreren Sichtern und zum Entfüllern verwendet werden. Beispielsweise ist so ein einfache und wirtschaftliche Absichten des mineralischen Anteils in den Fraktionen 0 bis 4 mm, 4 bis 12 mm, 12 bis 45 mm und über 45 mm möglich.

Weiters gewährleistet das Verfahren eine kontinuierlich gute Abscheidung bzw. Sortierung trotz der Rückführung der Sichterluft. Schließlich behindert die gröbere, mit der Luft mittransportierte Fraktion nicht die Abfilterung des Feinstanteiles und es können längere Filterstandzeiten bzw. Abreinigungsintervalle erreicht werden.

Durch die Merkmale des Anspruchs 2 wird eine besonders kompakte Anlagenbauweise erzielt. Durch die Maßnahmen nach Anspruch 5 können lange Rohrleitungen, die zu zusätzlichen Druckabfällen im System führen und größere Ventilatoren notwendig machen, vermieden werden, was wiederum zur wirtschaftlicheren und kompakteren Ausführung beiträgt, so daß eine derartige Anlage in einem transportablen Container, vorzugsweise einem Normcontainer, mittels eines für den besagten Container adaptierten Lastkraftwagen an die jeweilige Einsatzstelle gebracht und dort aufgestellt oder auch beispielweise fix auf einem Lastwagenaufbau als fahrbare Entstaubungs- bzw. Sichteranlage aufgebaut werden.

Eine optimale Einstellung auf jedes beliebige Materialgemisch bzw. die Fraktionszusammensetzung des Ausgangsmaterials wird durch die Merkmale des Anspruchs 3 erzielt. Außerdem wird eine effiziente Luftrückführung in den Sichterteil der Anlage ermöglicht und der Austritt der groben Fraktion bei geringem baulichem Aufwand nicht behindert.

Die Konstruktion nach Anspruch 4 gestattet eine gewisse Verlangsamung und Vergleichmäßigung der rückgeführten Arbeitsluft vor Wiedereintritt in den Sichter. Außerdem wird ein guter pneumatischer Abschluß des Systems bei möglichst ungehindertem Austritt der groben Fraktion gewährleistet.

Die Merkmale gemäß Anspruch 6 dienen zur Unterstützung des Sortier- und Trennungseffektes und zur optimalen Anpassung des Sichterteiles der Anlage auf jede beliebige Ausgangsmaterialzusammensetzung.

Die Merkmale nach Anspruch 7 machen eine optimale Luftverteilung in Abhängigkeit von den jeweiligen Gegebenheiten, speziell der Korngrößenverteilung des Ausgangsmaterials möglich.

In der nachfolgenden Beschreibung soll die Erfindung anhand von den Schutzbereich nicht einschränkenden Ausführungsbeispielen unter Bezugnahme auf die beigefügten Zeichnungen näher erläutert werden.

Dabei zeigen
- Fig. 1: den Ablauf eines erfindungsgemäßen Verfahrens in schematischer Weise,
- Fig. 2a und 2b: Seitenansichten einer in einem Normcontainer (Abrollkipper) enthaltenen erfindungsgemäßen Anlage mit zwei Sichtern und einem gemeinsamen Filter,
- Fig. 2c: eine Seitenansicht der Anlage der Fig. 2a und 2b in Transportposition auf einem Lastkraftwagen,
- Fig. 3: eine vergrößerte Seitenansicht entsprechend Fig. 2b,

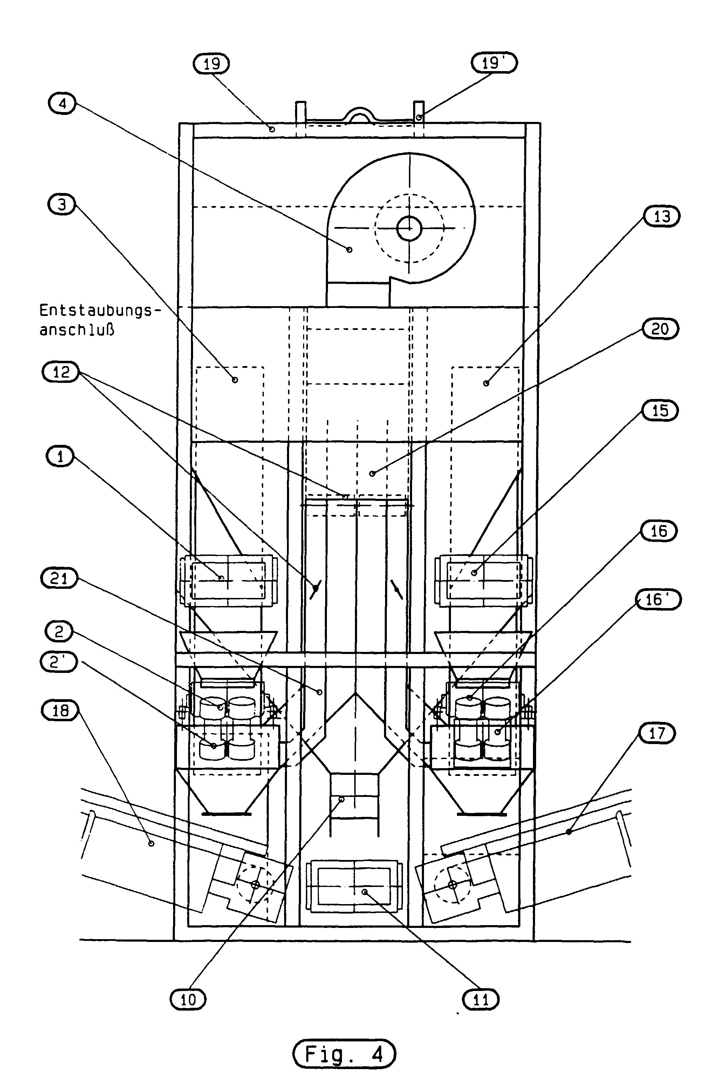

- Fig. 4: eine vergrößerte Seitenansicht entsprechend Fig. 2a und
- Fig. 5a bis 5c: drei Stadien während des Abladens einer erfindungsgemäßen Anlage von einem Lastkraftwagen.

Das zu sortierende oder von Verunreinigungen zu trennende Schüttgut wird über eine im Prinzip beliebige Einrichtung 1, etwa ein Förderband, auf eine Zufuhrrinne 2, vorzugsweise eine Vibrationsrinne mit beispielsweise Unwuchtmotoren 2', zum Sichter 3 transportiert. Aus dieser Rinne 2 wird das Material in die Abwurfschurre des Sichters 3 abgeworfen, durch welche über einen Ventilator 4 im Gegenstrom zum hinunterfallenden Schüttgut Luft hindurchgesaugt wird. Dadurch wird die leichte Fraktion des Materials von der groben Fraktion getrennt, welche unten aus dem Sichter 3 wieder austritt. Der Trenneffekt kann durch das Einblasen von Luft mit hoher Geschwindigkeit unterhalb der Rinne 2 über eine vorzugsweise bis zu 180° um eine im wesentlichen horizontale Achse schwenkbare Einblasdüse 5 noch verbessert werden. Durch die hohe Einblasgeschwindigkeit wird, bedingt durch die Körnungsbandbreite, auch etwas von der groben Fraktion nach oben hin mitgerissen, welcher Anteil aber in einer Beruhigungsstrecke über der Aufgabeöffnung ausfallen kann und schließlich auch unten aus dem Sichter austritt.

Nach dem Sichter 3 gelangt die mit der leichten Fraktion beladene Luft in ein Filter 6, welches vorzugsweise aus zumindest einer Vorabscheidekammer 7 und zumindest einer eigentlichen Filterkammer 8 besteht. Die Vorabscheidekammer 7 ist von der Filterkammer 8 durch eine Zwischenwand 6' getrennt, wobei eine Durchtrittsöffnung vorzugsweise im unteren Bereich des Filters 6 vorgesehen ist, was durch die Umlenkung und Führung des Luftstromes die Vorabscheidung größerer Partikel wesentlich begünstigt. Die Vorabscheidekammer 7 ist im wesentlichen einbautenfrei, in ihr sind keinerlei Filterelemente vorhanden, und es werden hier die gröberen Anteile ausgeschieden, die über beispielsweise eine Zellenradschleuse 10 ausgetragen und auf eine Transporteinrichtung wie etwa ein Förderband 11 geleitet werden. Der Feinststaub wird in der nach der Vorabscheidekammer 7 folgenden Filterkammer 8 an Filterelementen 9, vorzugsweise Schlauch- oder Taschenfiltern, abgeschieden. Die Abreinigung des Staubes von den Filterelementen 9 erfolgt in an sich bekannter Weise pneumatisch und der Filterstaub wird ebenfalls über die Zellenradschleuse 10 ausgetragen und auf die Fördereinrichtung 11 geleitet. Von dort wird er beispielsweise in einen Container abgefüllt, ebenso wie der etwas gröbere Anteil aus der Vorabscheidung.

Die gereinigte Luft nach den Filterelementen 9 weist einen Staubgehalt von maximal 20 mg/Nm³ auf und könnte so unter Einhaltung der gesetzlichen Vorgaben ohne weiteres ins Freie geleitet werden. Erfindungsgemäß wird die Reinluft aber wieder dem Sichter 3 als Arbeitsluft für die neuerliche Sortierung oder Trennung zugeführt, womit jegliche Emission aus der Anlage und die Ansaugung von Frischluft vermieden wird. Auch der Düse 5 wird derart gereinigte Arbeitsluft im Kreislauf wieder zugeführt. Dabei können durch Drosselklappen 12 die Luftgeschwindigkeiten und/oder Mengen individuell eingeregelt werden.

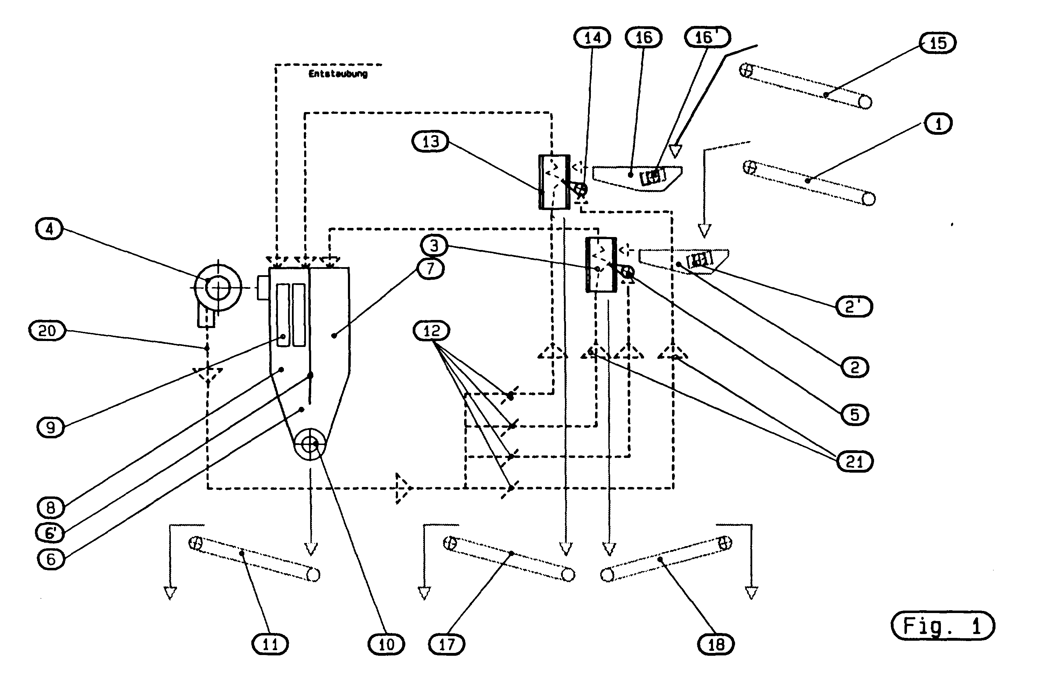

Wie in Fig. 1 dargestellt ist, kann allenfalls zumindest ein weiterer Sichter 13, vorteilhafterweise ebenfalls mit einer den Trenneffekt verbessernden Düse 14 vorgesehen sein. um eine Sichtung eines anderen Materials, eine weitere Sichtung eines der Materialien der ersten Sichtung in andere Größenfraktionen od. dgl. zu gestatten. Diesem oder jedem weiteren Sichter 13 wird das Schüttgut vorteilhafterweise ebenfalls über eine Transporteinrichtung 15 und eine Vibrationsrinne 16 mit Unwuchtmotoren 16' zugeführt. Die aus dem oder jedem Sichter 3, 13 austretenden groben Fraktionen fallen, gleich wie die Feinstfraktion, auf vorzugsweise Förderbänder 17, 18 und gelangen so beispielsweise auf Halde.

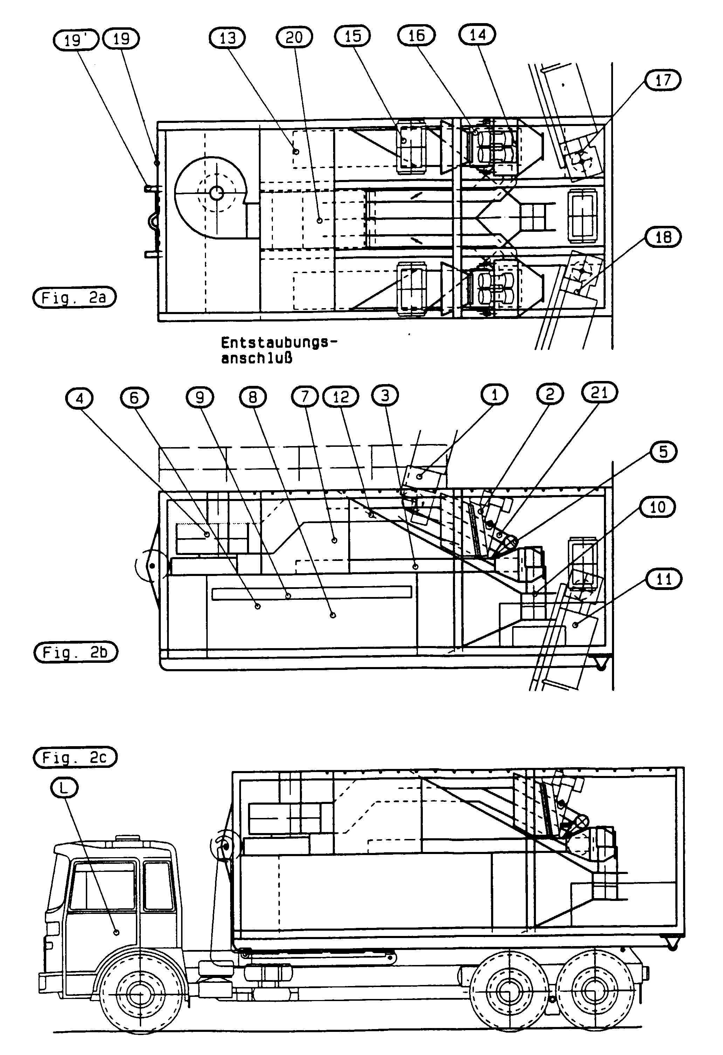

Die Fig. 2a bis 2c zeigen eine spezielle und besonders kompakte Ausführung einer erfindungsgemäßen Anlage mit zwei Sichtern und einem gemeinsamen Filter. Gleiche Anlagenteile wie in Fig. 1 dargestellt sind mit gleichen Bezugszeichen gekennzeichnet. Innerhalb eines Normcontainers, im vorliegenden Fall eines STAKO-Abrollcontainers 19, befinden sich zwei Sichteranlagen 3, 13 mit den zugehörigen Abwurfrinnen 2, 16. Der Container 19 ist mit einer Lasche 19' versehen, die zur Ankoppelung eines Zughakens einer Kranvorrichtung, Winde od. dgl. dient, mit welcher der Container 19 auf einen Lastwagen L in eine in Fig. 2c dargestellte Transportposition gehoben oder gezogen werden kann.

Oberhalb der Rinnen 2, 16 sind die Endabschnitte der Förderbänder 1, 15 angedeutet. Unmittelbar neben den beiden Sichtern 3, 13 und im vorliegenden Fall die oberen Abschnitte dieser Anlagenteile umgebend ist lediglich ein gemeinsamer Filter 6 mit sich nach unten hin verjüngendem Gehäuse und jeweils einer filterelementfreien Vorabscheidekammer 7 und einer Filterkammer 8 mit Tuchfilterelementen vorhanden. Der Ventilator 4 befindet sich, wie speziell aus Fig. 2b erkennbar ist, oberhalb der gegenüber der Filterkammer 8 etwas weniger hohen Vorabscheidekammer 7. Durch diese Vorabscheidekammer 7 ist aus Gründen der Platzersparnis und des kompakten Aufbaus der Anlage ein Stück der Luftrückleitungen 20 zu den Sichtern 3, 13 geführt. Ebenfalls können die Abzweigungen und die nachfolgenden Zweigleitungen 21 zur Düse 5 bzw. 14 ebenfalls innerhalb der Vorabscheidekammer 7 vorgesehen sein. Die Luftrückleitungen 20 und Zweigleitungen 21 sind mit vorteilhafterweise individuell steuerbaren Drosselklappen 12 ausgestattet.

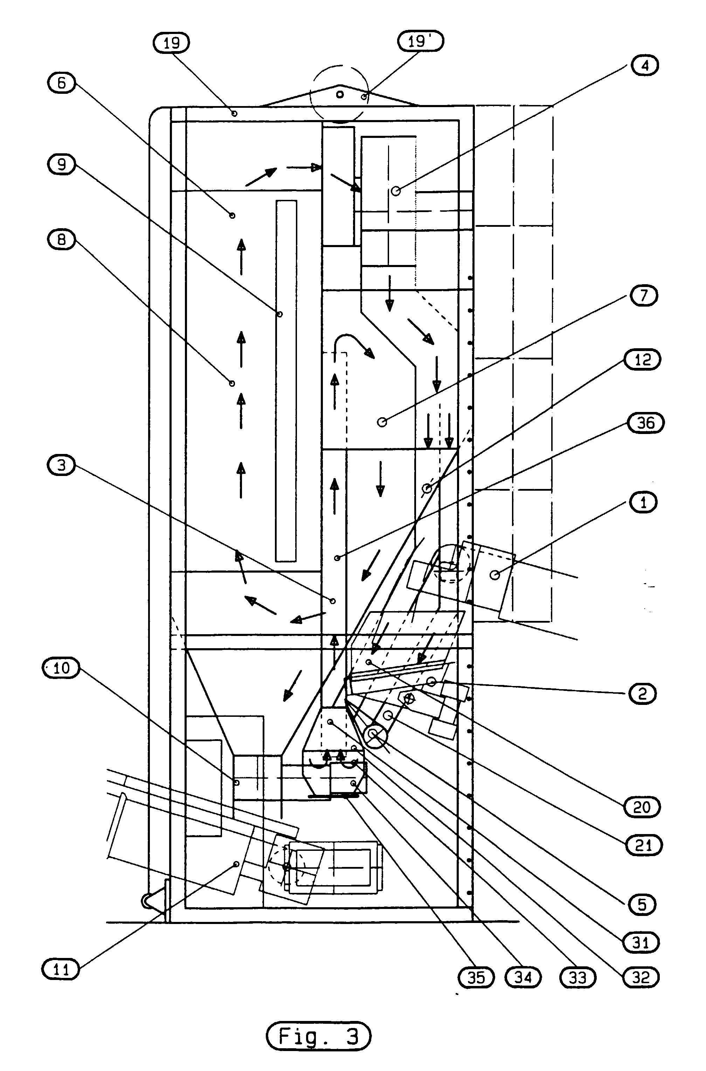

Der genaue Aufbau des Sichters 3 - der zweite Sichter der Anlage der Fig. 2a bis 2c ist entsprechend aufgebaut - ist besser auf der vergrößterten Darstellung der Fig. 3 zu erkennen.

Der Sichter 3 umfaßt ein im wesentlichen senkrecht stehendes Rohr, welches zwei Abschnitte aufweist. Der auch Abwurfschurre 31 genannte Abschnitt unterhalb der Einbringungsöffnung bzw. der Abwurfrinne 2 für das Schüttgut wird im wesentlichen nur nach unten hin von der groben Fraktion passiert. Das untere Ende der Abwurfschurre 31 ist von einer im wesentlichen ringförmigen Kammer 32, 33, 34 umgeben, in welche Kammer die Luftrückleitung 20 vom Filter 6 vorzugsweise im obersten Abschnitt 32 einmündet. Durch die nach unten hin vorgesehene Querschnittserweiterung des oberen Abschnittes 32 ergibt sich für die eingeleitete Luft ein Verlangsamungs- bzw Vergleichmäßigungseffekt. An den oberen Abschnitt 32 schließt sich ein mittlerer Abschnitt mit im wesentlichen konstantem Querschnitt 33 an, der sich bis unterhalb des unteren Endes der Abwurfschurre 31 erstreckt. Schließlich folgt noch ein sich auf die Achse der Abwurfschurre 31 hin verjüngender Endabschnitt 34, der nach unten hin von einer mit einer Öffnung für den Durchtritt der Grobfraktion versehenen Platte 35 abgeschlossen ist. Durch diese im wesentlichen konvexe Ausbildung der das untere Ende der Abwurfschurre 31 umgebenden Kammer 32, 33, 34 ergibt sich ein guter pneumatischer Abschluß des Systems gegenüber unerwünschten Luftverlusten bei gleichzeitiger Austrittsmöglichkeit für die grobe Fraktion am unteren Ende des Sichters 3. Die aus dem Filter 6 und durch die Luftrückleitung 20 kommende reine Arbeitsluft tritt, wie durch die Pfeile angedeutet ist, innerhalbe der Kammer 32, 33, 34 wieder in den Sichter 3, d. h. in den unteren Bereich der Abwurfschurre 31 ein, während der in die Leitung 21 abgezweigte Anteil der Luft über die Düse 5 oberhalb der Kammer 32, 33, 34 aber unterhalb der Rinne 2 in das Rohr des Sichters 3 direkt auf den eingeworfenen Materialstrom hin eingeblasen wird.

Oberhalb der Abwurfschurre 31 und damit oberhalb der Einbringöffnung für das Material in den Sichter 3 ist eine Beruhigungsstrecke 36 vorgesehen, die am oberen Ende in die Vorabscheidekammer 7 mündet und deren größter Teil in die Vorabscheidekammer 7 hineinreicht und von dieser bzw. vom Filter 6 allseitig umgeben ist. Hier können sich durch die starke Lufteinblasung durch die Düse 5 mitgerissene Partikel der groben Fraktion absetzen und nach unten hin absinken.

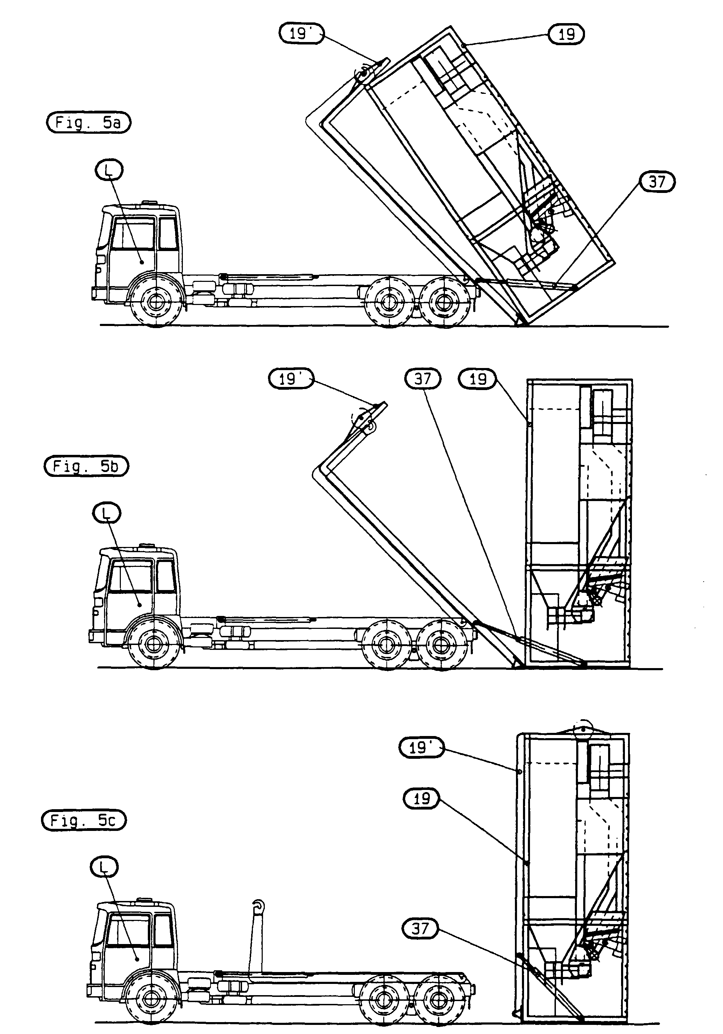

In den Fig. 5a bis 5c ist dargestellt, wie die erfindungsgemäße Anlage, enthalten in einem Abrollcontainer, von einem Lastkraftwagen L mit Hakenliftsystem abgeladen und senkrecht aufgestellt wird. Zu diesem Zweck sind zwei gegeneinander verschwenkbare Rahmenteile vorgesehen, zwischen welchen beispielsweise eine Kolben-Zylinder-Einheit 37, eingesetzt ist. Nach dem Abrollen vom Lastkraftwagen L nimmt der Container 19 mit der erfindungsgemäßen Anlage eine Lage von ca. 45° ein. Dann wird die Vorrichtung 37 betätigt, welche die Anlage dann in eine senkrechte Position, die Betriebsstellung, bringt. Auf diese Weise kann die erfindungsgemäße Anlage in wirtschaftlicher Weise, speziell ohne zusätzliche Kran- oder Hebevorrichtungen oder andere zusätzliche Hilfsmittel, auf jedem beliebigen Einsatzort aufgestellt werden.

Die erfindungsgemäße Ausführung der Anlage mit zwei Sichterteilen 3, 13 bietet den weiteren Vorteil, daß mit einer einzelnen und dabei überaus kompakten Anlage in wirtschaftlicher Weise je nach Bedarf und Anforderungen die Sichtung, allenfalls kombiniert mit einer Entstaubung, oder auch nur eine Entstaubung durchgeführt werden kann. Dabei wird für die Entstaubung der Materialzulauf 1, 2 bzw. 15, 16 des Sichters 3 oder 13 abgesperrt und eine Leitung für die zu entstaubende Luft angeschlossen, sodaß diese Luft in das Filter 6 geleitet werden kann. Der Sichterteil der Anlage wird dabei lediglich als Leitungsabschnitt zum Filter 6 genutzt. Wenn diese Maßnahme bei lediglich einem Sichterteil 3 der Anlage vorgenommen wird, kann dieser Abschnitt für die Entstaubung, bei nicht aktiven Sichter 3 mit gesperrter Materialzufuhr 1, 2, der andere Teil 13 für die eigentliche Sichtung oder Trennung zugeführten Materials verwendet werden. Selbstverständlich kann die Materialzufuhr auch bei allen beiden Sichtern 3 und 13 gesperrt werden, sodaß die Anlage im Gesamten nur für die Entstaubung von über eine Entstaubungsrohrleitung zugeführter Luft genutzt werden kann.

## Patentansprüche

1. Verfahren zur Sortierung von Schüttgut in zumindest zwei Fraktionen unterschiedlicher Korngröße bzw. Dichte, umfassend die Sichtung des Schüttgutes in zumindest einem luftdurchströmten Sichter, wobei die aus dem Sichter kommende Luft einer Vorabscheidung und einer nachfolgenden Ausfilterung der feinen Fraktion unterworfen wird, und der Luftstrom nach Ausfilterung der feinen Fraktion abgesaugt und im Kreislauf wieder dem Sichter zur neuerlichen Verwendung zugeführt wird, dadurch gekennzeichnet, dass der Luftstrom nach erfolgter Vorabscheidung der mitgeführten Fraktion unmittelbar von unten nach oben abgelenkt und ausgefiltert wird, danach der abgesaugte Luftstrom in zumindest zwei Teilströme aufgeteilt wird, von welchen ein Teilstrom von unten in die Schurre (31) des Sichters (3, 13) und der andere Teilstrom seitlich und oberhalb des unteren Endes der Schurre (31) in diese eingebracht und auf das herabfallende Schüttgut gerichtet wird.

2. Anlage zur Durchführung des Verfahrens nach Anspruch 1, umfassend zumindest einen Sichter (3, 13) für das Schüttgut und zumindest einen nachgeschalteten Filter (6), bestehend aus mindestens einer Vorabscheidekammer zur Abscheidung der groben Fraktion und mindestens einer Filterkammer zur Abscheidung der feinen Fraktion aus der aus dem Sichter kommenden Luft, an welche zumindest eine Rückführleitung (20) vom Filter (6) zu dem oder jedem Sichter (3, 13) vorgesehen ist, dadurch gekennzeichnet, dass die Vorabscheidekammer (7) von der Filterkammer (8) durch eine die Luft umlenkende Zwischenwand (6') getrennt ist, wobei die Rückführleitung (20) mindestens zwei Zweigleitungen (21) aufweist, von welchen eine dem Sichter (3) als Arbeitsluft und die andere einer in den Sichter (3) mündenden Einblasdüse zugeführt ist.

3. Anlage nach Anspruch 2, dadurch gekennzeichnet, dass der Sichter (3) ein im wesentlichen senkrecht stehendes Rohr aufweist, welches aus zwei Abschnitten besteht, von welchen der unterhalb der Einbringungsöffnung für das Schüttgut befindliche als Abwurfschurre (31) genannte Abschnitt an seinem unteren Ende von einer im wesentlichen ringförmigen nach unten offenen Kammer (32, 33, 34) umgeben ist, in welche die Luftrückleitung (20) einmündet.

4. Anlage nach Anspruch 3, dadurch gekennzeichnet, dass die ringförmige Kammer (32, 33, 34) einen sich nach unten hin erweiternden Abschnitt (32) aufweist, in welchem die Luftrückleitung (20) vom Filter (6) einmündet, an welchen Abschnitt (32) ein bis über das untere Ende der Schurre (31) hinausreichender Abschnitt (33) konstanten Querschnittes anschließt, wobei der Querschnitt des unteren Endes (34) der ringförmigen Kammer nach unten hin abnimmt.

5. Anlage nach Anspruch 4, dadurch gekennzeichnet, dass der obere Abschnitt (36) des Sichterrohres in das Filter (6) hineinragt und von diesem allseitig umgeben ist.

6. Anlage nach den Ansprüchen 4 bis 5, dadurch gekennzeichnet, dass der Sichter (3, 13) oberhalb des unteren Endes der Schurre (31) und unterhalb oder in der Einlaufrinne (2, 16) mit zumindest einer schwenkbaren Düse (5, 14) versehen ist.

7. Anlage nach Anspruch 2, dadurch gekennzeichnet, dass in jeder Zweigleitung (21), in Strömungsrichtung gesehen, jeweils hinter der Abzweigung, ein Drossel- oder Absperrelement (12) für den Luftstrom vorgesehen ist, wobei jedes derartige Element (12) unabhängig von allen anderen Elementen betätigbar ist.

## Claims

1. A method for sorting bulk material into at least two fractions of different grain size or density, respectively, comprising classifying the bulk material in at least one air-passed separator, the air leaving the separator being subjected to a pre-separation and subsequent filtering out of the fine fraction, and the air flow being sucked off after the fine fraction has been filtered out and being recirculated again to the separator for re-use, characterized in that after pre-separation of the entrained fraction has been effected, the air flow is immediately deflected from bottom to top and filtered, subsequently the sucked-off air flow is divided into at least two partial flows, of which one partial flow is introduced from the bottom into the chute (31) of the separator (3, 13) and the other partial flow is introduced into the chute (31) laterally and from above the lower end thereof and directed onto the dropping bulk material.

2. A plant for carring out the method according to claim 1, comprising at least one separator (3, 13) for the bulk material and at least one filter (6) arranged therebehind, consisting of at least one pre-separating compartment for separating the coarse fraction and at least one filtering compartment for separating the fine fraction from the air leaving the separator, on which at least one return duct (20) from the filter (6) to the or each separator (3, 13) is provided, characterized in that the pre-separating compartment (7) is separated from the filtering compartment (8) by an air-deflecting intermediate wall (6'), the return duct (20) comprising at least two branch ducts (21), one of which is guided to the separator (3) as a working air duct, and the other one is guided to an injection nozzle that opens into the separator (3).

3. A plant according to claim 2, characterized in that the separator (3) comprises a substantially perpendicular pipe consisting of two portions, of which the one provided below the charging opening for the bulk material and termed dropping chute (31) at its lower end is surrounded by a substantially annular, downwardly open compartment (32, 33, 34) into which the air return duct (20) enters.

4. A plant according to claim 3, characterized in that the annular chamber (32, 33, 34) comprises a downwardly widening portion (32) into which the air return duct (20) from the filter (6) enters, the portion (32) being followed by a portion (33) of constant cross-section extending to beyond the lower end of the chute (31), the cross-section of the lower end (34) of the annular compartment decreasing downwardly.

5. A plant according to claim 4, characterized in that the upper portion (36) of the separator tube extends into the filter (6) and is surrounded by the latter on all sides.

6. A plant according to claims 4 to 5, characterized in that the separator (3, 13) is provided with at least one pivotable nozzle (5, 14) above the lower end of the chute (31) and below or within the entry channel (2, 16).

7. A plant according to claim 2, characterized in that a throttle or shut-off element (12) for the air flow is provided in each branch duct (21) downstream of each branching, viewed in flow direction, each such element (12) being capable of being actuated independently of all other elements.

## Revendications

1. Procédé pour le tri de matières en vrac en au moins deux fractions de tailles de grain ou de densités différentes, comportant les opérations de trier les matières en vrac dans au moins un séparateur parcouru par de l'air, l'air en provenance du séparateur étant soumis à un prè-fractionnement et d'un filtrage suivant de la fraction fine, et l'écoulement d'air étant aspiré après filtrage de la fraction fine et ramenée au séparateur pour une nouvelle utilisation selon un trajet en cercle, caractérisé en ce que l'écoulement d'air est dévié immédiatement de bas vers le haut après le pré-fractionnement de la fraction amenée et filtré, ensuite l'écoulement d'air aspiré est divisé en au moins deux écoulements partiels dont un moins un écoulement partiel est introduit par en bas dans la goulotte (31) du séparateur et dont l'autre écoulement partiel est introduit latéralement et au-dessus de l'extrémité inférieure de la goulotte (31) dans celle-ci et est orienté vers la matière en vrac qui tombe.

2. Installation pour la mise en oeuvre du procédé selon la revendication 1, comprenant au moins un séparateur (3,13) pour les matières en vrac et au moins un filtre (6) monté en aval, se composant d'au moins une chambre de pré-fractionnement pour la séparation de la fraction grossière et d'au moins une chambre de filtrage pour la séparation de la fraction fine de l'air sortant du séparateur, et sur laquelle est prévue au moins une conduite de retour (20) du filtre (6) au ou à chaque séparateur (3,13), caractérisé en ce que la chambre de pré-fractionnement (7) est séparée de la chambre de filtrage (8) par une cloison de déviation d'air (6), la conduite de retour (20) comportant au moins deux conduites de branchement (21) dont l'une est amenée au séparateur (3) comme air de travail et dont l'autre est amené à une tuyère d'introduction débouchant dans le séparateur (3).

3. Installation selon la revendication 2, caractérisé en ce que le séparateur (3) comporte un tube essentiellement vertical et qui se compose de deux portions dont une se trouvant en dessous de l'ouverture d'introduction de la matière en vrac, nommée goulotte d'éjection, est entourée à son extrémité inférieure par une chambre (32, 33, 34) sensiblement annulaire et ouverte vers le bas, dans laquelle débouche la conduite retour d'air (20).

4. Installation selon la revendication 3, caractérisé en ce que la chambre annulaire (32, 33, 34) comporte une portion (32) s'élargissant vers le bas et dans laquelle débouche la conduite de retour (20) du filtre (6), à cette portion (32) faisant suite une portion (33) de section transversale constante et s'étendant au-delà de l'extrémité inférieure de la goulotte (31), la section transversale de l'extrémité inférieure (34) de la chambre annulaire diminuant vers le bas.

5. Installation selon la revendication 4, caractérisé en ce que la portion supérieure (36) du tube de fractionnement fait saillie dans le filtre (6) et est entouré par celui-ci sur tous les côtés.

6. Installation selon les revendications 4 à 5, caractérisé en ce que le séparateur (3,13) est pourvu au-dessus de l'extrémité inférieure de la goulotte (31) et en dessous ou dans la gorge d'entrée de (2, 6) d'au moins une tuyère pivotante (5,14).

7. Installation selon les revendications 2 caractérisé en ce que dans chaque conduite de branchement (21), vue dans la direction d'écoulement, est prévu chaque fois derrière le branchement un élément d'étranglement ou d'obturation (12) pour l'écoulement d'air, chacun de tels éléments (12) étant actionnable indépendamment de tous les autres éléments.
